# DEMANDE DE BREVET EUROPEEN

(11) **EP 3 032 465 A1**
(43) Date de publication de la demande: **15.06.2016**
(21) Numéro de dépôt: 14307022.5
(22) Date de dépôt: 12.12.2014
(51) Int. Cl.: G06K 19/07, G06K 7/10

(54) **Procédé de communication radiofréquence avec discrimination de lecteur radiofréquence**

(71) Demandeur: GEMALTO SA, 92190 Meudon (FR)
(72) Inventeur: Thill, Michel, 13881 GEMENOS Cedex (FR); Arnoux, Christophe, 13881 GEMENOS Cedex (FR)

(57) **Abrégé**

L'invention concerne un procédé de communication entre un dispositif (2) radiofréquence RF et un premier lecteur (4, 15, 17) radiofréquence NFC émettant un champ radiofréquence, ledit procédé comprenant une étape de contrôle (400) de la communication ; Il est caractérisé en ce que l'étape de contrôle intervient sur le dispositif RF en fonction d'une variation du champ radiofréquence.

L'invention concerne également le dispositif correspondant.

## Description

L'invention concerne un procédé de communication entre un dispositif radiofréquence RF et un lecteur radiofréquence. De préférence, la communication s'effectue en présence d'au moins un second lecteur radiofréquence.

En particulier, ce dispositif comprend un transpondeur radiofréquence (Puce de circuit intégré connecté à une antenne comme des cartes à puce sans-contact). De tels dispositifs radiofréquences sont utilisées actuellement en étant adossés à un téléphone portable pour lui conférer une fonctionnalité radiofréquence qu'il n'a pas nécessairement. Les dispositifs sont de préférence conformes à la norme ISO 14443. D'autres types de communication comme du type UHF peuvent être concernées par l'invention.

L'invention trouve application dans les transactions radiofréquences de proximité de type NFC (Near field communication)

Les dispositifs radiofréquences (RF) visés préférentiellement, comprennent généralement un corps support isolant contenant une interface de communication à antenne reliée à une puce radiofréquence. Certains peuvent opérer comme une carte bancaire sans-contact ou de tickets sans contact, autre objet sans contact.

Ces dispositifs RF peuvent comprendre également des moyens supplémentaires pour pallier des problèmes de perturbations de champ électromagnétiques engendrés par les dispositifs NFC auxquels ils sont associés ou fixés ou par rapport à leur utilisation. Parmi ces moyens supplémentaires, on peut citer une couche de ferrite s'étendant sur une surface du support de dispositif RF ou une couche d'un insert (ou inlay) comportant une antenne passive destinée à amplifier le signal, une couche adhésive, une feuille amovible sur l'adhésif.

Les dimensions externes de ces dispositifs RF sont différentes en général des cartes à puce sans contact. Ils sont en général plus petit en surface principale (par exemple 3 x 3 cm) et plus épais qu'une carte à puce au format ISO 7816 voire entre 0,78 mm et 3 mm. Le cas échéant, ces dispositifs RF peuvent prendre la forme ou constituer une étiquette RFID d'une épaisseur inférieure à 0,78 mm.

Des dispositifs RF visés par l'invention sont de préférence de type passif. Ils puisent leur énergie dans le champ radiofréquence émis par un lecteur radiofréquence et communique par modulation du champ du lecteur par modulation de leur impédance. Toutefois, l'invention peut viser d'autres dispositifs RF notamment actifs ayant leur propre source d'énergie (par exemple une batterie) ce qui peut permettre d'émettre leur propre champ électromagnétique comme un lecteur NFC ou d'amplifier leur réponse.

Ces dispositifs RF peuvent comprendre des programmes applicatifs notamment de transport, de porte-monnaie électronique pour des paiements bancaire notamment de faible montant.
Ils peuvent comprendre également des droits d'accès, des unités à décompter dans un compteur d'unités ou espace mémoire.

### Problème Technique.

Aujourd'hui, ces dispositifs RF continuent à trouver un intérêt pour équiper des dispositifs NFC notamment des téléphones ayant une fonction de lecteur NFC ou émulant un dispositif RF tel qu'une carte sans contact. Il est en effet avantageux sur le plan de l'indépendance, sécurité, compatibilité technique ou facilité de fabrication et/ou distribution, promotion pour des fournisseurs de services ou de programmes applicatifs spécifiques d'intégrer leur programme sur des dispositifs RF de manière indépendante des téléphones portables.

Cependant, quand un dispositif RF autocollant équipe un téléphone portable NFC, il a l'inconvénient de répondre également au lecteur NFC du téléphone perturbant ainsi la communication ou la transaction avec un lecteur radiofréquence distant.

Deux problèmes ci-après ont été identifiés par les inventeurs.
Le premier (pb1) est impossibilité d'utiliser le dispositif RF pour une transaction avec un lecteur NFC distant. L'utilisateur ne peut utiliser le dispositif RF en lecture par une borne NFC distante car le dispositif RF répond au lecteur NFC portable. Le dispositif RF est sollicité (ou perturbé) en premier par le champ du lecteur portable NFC de proximité.

Le second (pb2) est impossibilité d'utiliser le lecteur portable NFC pour lire autre chose que le dispositif RF. L'utilisateur ne peut lire un second dispositif RF avec son lecteur NFC portable car le premier dispositif RF répond en premier et en priorité au lecteur NFC portable du fait sa proximité. De ce fait, un second dispositif RF ne peut être lu. Il se peut aussi que le lecteur NFC de proximité et/oui le dispositif RF ne partagent pas une application (ou programme applicatif), ce qui peut bloquer la lecture du lecteur NFC portable.

A ce jour, pour éviter que le dispositif RF accessoire (généralement autocollant), réponde au lecteur NFC du téléphone au lieu de répondre au lecteur d'une borne radiofréquence distante, il faut désactiver la fonctionnalité NFC du téléphone (ou attendre qu'elle se désactive d'elle-même sur certain téléphone), ce qui est peu pratique. Dans d'autres cas, la résolution du problème requiert une intervention volontaire de l'utilisateur sur son téléphone pour désactiver la fonction NFC.

L'invention propose de résoudre les problèmes identifiés ci-dessus.

L'invention permet notamment d'éviter les désordres apportés par un dispositif RF lors de son association avec à un lecteur NFC.

### Principe de l'invention.

Pour résoudre au moins un des problèmes, ci-dessus, l'invention propose de savoir quel lecteur est actif entre au moins deux lecteurs. Notamment, elle propose de savoir si les requêtes radiofréquences arrivant au transpondeur RF (notamment collé au dos d'un téléphone NFC) proviennent de la puce NFC du téléphone, sur lequel il est adossé, ou bien si elles proviennent d'un lecteur

Pour solutionner au moins un des problèmes, les inventeurs proposent de faire en sorte que le transpondeur RF autocollant (ou étiquette RF) ne réponde pas au lecteur NFC du téléphone quand il est actif.

Pour cela, les inventeurs proposent de discriminer le champ radiofréquence du téléphone NFC par rapport à celui de la borne (ou lecteur RF) distante. La discrimination peut être basée de préférence sur une mesure de variation du champ électromagnétique perçu au niveau du dispositif RF.

Les inventeurs ont constaté qu'un utilisateur est amené à approcher son téléphone (ou dispositif portable) NFC d'une borne radiofréquence (notamment fixe) et que le champ électromagnétique émis par la borne radiofréquence et capté par le dispositif radiofréquence autocollant a tendance a augmenter en puissance ou intensité au fur et à mesure de l'approche de la borne RF.

Au contraire, le champ électromagnétique du téléphone portable NFC capté par le dispositif radiofréquence autocollant présente une montée en intensité ou puissance en fonction du temps plus rapide.

L'invention a donc pour objet un procédé de communication entre un dispositif radiofréquence RF et un premier lecteur radiofréquence NFC émettant un champ radiofréquence, ledit procédé comprenant une étape de contrôle de la communication ; Le procédé se distingue en ce que l'étape de contrôle intervient sur le dispositif RF en fonction d'une variation du champ radiofréquence reçu du premier lecteur radiofréquence NFC.

Selon d'autres caractéristiques du procédé :
- Il comporte une étape de détermination d'une valeur représentative de la variation du champ radiofréquence reçu du premier lecteur radiofréquence NFC ;
- La détermination est basée sur une mesure de la variation en fonction du temps de la tension (Vcc) ou de l'intensité (Icc) de courant généré par le champ radiofréquence (C1, C2) reçu au niveau du dispositif RF ;
- L'étape de contrôle effectue une inhibition ou activation (A) du dispositif RF en fonction de ladite variation ;
- Le procédé comprend une étape d'inhibition du dispositif RF si la valeur de variation est supérieure à une valeur prédéterminée, pour ne pas répondre au premier lecteur ;
- On détecte une valeur de tension (VRF2), au terme d'une durée (t1, t2) de réception de champ radiofréquence, notamment de 1,5 micro secondes et on inhibe la réponse du dispositif RF (2) si cette
valeur de tension est supérieure à une valeur prédéterminée, notamment 1,5 Volt ; - On détecte une valeur de tension (URF2), au terme d'une durée de réception de champ radiofréquence, notamment de 1,5 micro seconde et on active le dispositif RF ou le laisse en l'état, pour lui permettre de répondre, si cette valeur de tension est inférieure à une valeur prédéterminée, notamment 2,9 Volts.

L'invention a également pour objet un dispositif radiofréquence RF destiné à communiquer avec un premier lecteur radiofréquence émettant un champ radiofréquence, ledit dispositif comprenant des moyens de contrôle de la communication, caractérisé en ce que les moyens de contrôle sont configurés pour intervenir sur le dispositif RF en fonction d'une variation du champ radiofréquence.

### Description des figures.

- La figure 1A et 1B illustrent respectivement des étapes du procédé de communication conforme à un mode préféré de mise en oeuvre de l'invention ;
- La figure 2 illustre un système de communication conforme à un mode préféré de réalisation de l'invention ;
- La figure 3A et 3B illustrent respectivement un schéma électrique 2E du dispositif RF de l'invention selon un mode de réalisation et une vue structure schématique correspondante ;
- La figure 4 illustre un moyen de détection et/ou discrimination et/ou de contrôle équipant (ou pouvant agir sur) un dispositif RF des figures 3A et 3B.

### Description.

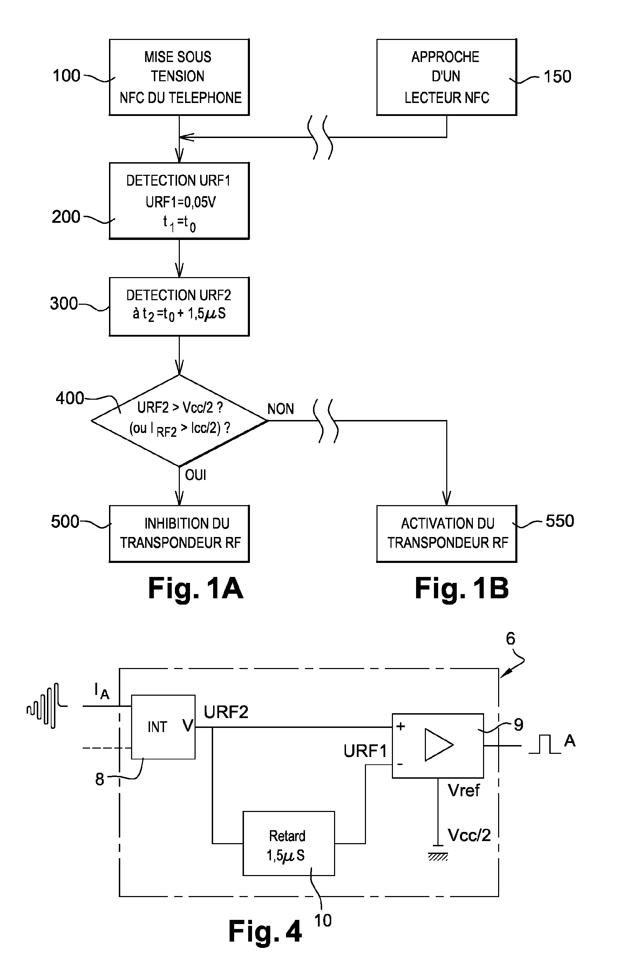

A la figure 1A, sont illustrées des étapes du procédé de communication entre un dispositif 2 radiofréquence RF et un premier lecteur 3 radiofréquence NFC selon un mode de mise en oeuvre.

Le lecteur est par exemple du type conforme à l'ISO 14443 émettant un champ de lecture radiofréquence à 13,56 MHz.
Toutefois, d'autre fréquences ou type de lecteur peuvent convenir à la mise en oeuvre de l'invention.

Le dispositif radiofréquence 2 est une carte bancaire de type sans contact conforme notamment à l'ISO 14443. Ce dispositif RF 2 est fixé dans un corps-support apte à adhérer à une coque d'un appareil de communication tel qu'un téléphone portable ou ordinateur.

Le procédé comprend une étape de contrôle de la communication basée sur (ou en fonction de) une variation du champ radiofréquence reçu du premier lecteur radiofréquence NFC. Pour ce contrôle, le procédé peut procéder, dans un premier temps, à la détermination d'une valeur représentative de cette variation.

La variation peut apparaître lorsqu'un utilisateur approche son dispositif RF d'un lecteur distant ou lorsqu'il actionne la fonction NFC de son téléphone. La variation selon une autre utilisation peut résulter d'une action brutale ou accidentelle dans l'approche du dispositif RF par rapport au lecteur NFC.

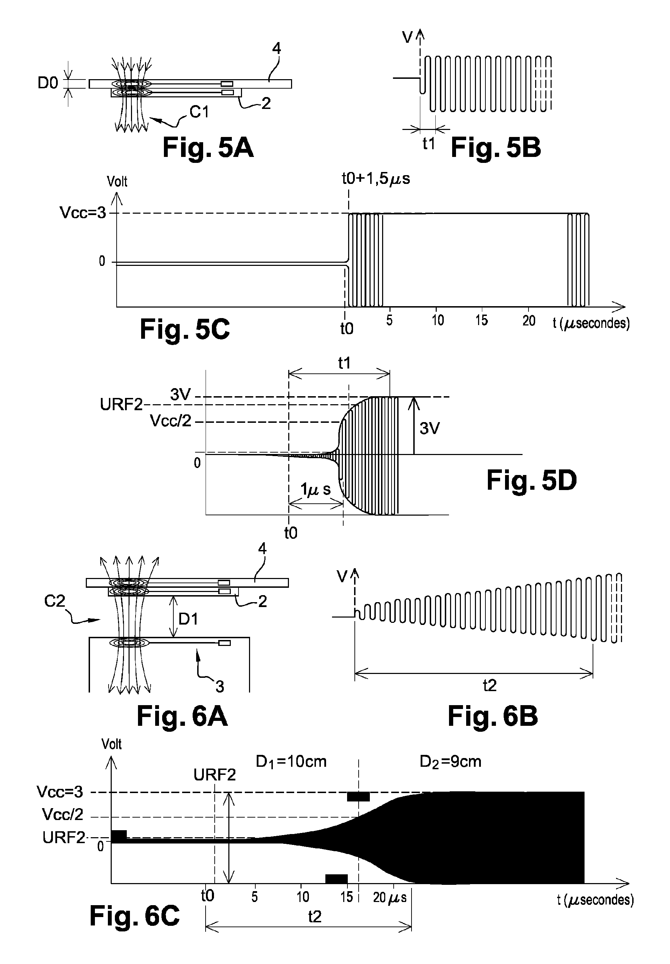

A l'étape 100, dans l'exemple, l'utilisateur active la fonction NFC du téléphone ce qui va avoir pour effet d'avoir une montée brutale du champ radiofréquence du téléphone (figure 5C et 5D).

Selon un mode de mise en oeuvre de l'invention, le contrôle de la communication peut être basé sur une variation le champ radiofréquence reçu au niveau du dispositif RF. Cette mesure apparait aux étapes 200 et 300 ci-après dans lesquelles on mesure en fonction du temps la tension ou l'intensité de courant généré par le champ radiofréquence au niveau du dispositif.

A l'étape 200, le procédé prévoit donc une première mesure / détection / prélèvement de la tension URF1 induite par le champ, par exemple dès que celle-ci apparaît ou est détectable notamment ici avec une valeur de tension induite égale à quelques dizaine de millivolts, notamment 50 millivolts. Cette première détection correspond à un instant to = zéro qui peut être compté notamment à partir de la porteuse du champ radiofréquence comme référence de temps ou tout autre moyen notamment temps de décharge d'une décharge de capacité.

A l'étape 300, le procédé effectue une seconde mesure/ détection ou prélèvement de tension URF2 induite à l'instant t1 = t0 + dt (Ici dt est égale à 1,5 µsecondes). On observe sur les figures 5C, 5D (expliquée ultérieurement) que la tension est presque à 3 Volts sans l'atteindre.

A l'étape 400 : le procédé prévoit un test de comparaison de la tension URF2 obtenue après l'intervalle de temps prédéterminé ci-dessus de (dt =1,5 µs) à une valeur prédéterminée de référence (Uref) égale (Vcc/2) = 3 Volts.

Toute autre mesure d'intervalle de temps peut convenir notamment une mesure du temps nécessaire pour parvenir au niveau de tension maximal égal ici à 3 Volts. L'intervalle de temps, est ici environ égal à 1,5 micro seconde.
Si la réponse au test est non, le procédé a une étape 550 développée ultérieurement. Dans le cas contraire, (branche oui), le procédé prévoit l'étape d'inhibition 500 ci-après.

A l'étape 500, le procédé provoque ou génère une inhibition du dispositif RF qui peut être mis en oeuvre via un programme ou un moyen de contrôle du dispositif expliqués ultérieurement.

Ainsi, l'invention permet d'éviter toute influence du lecteur NFC du téléphone sur le dispositif 2 fixé sur le téléphone 4. De même, le lecteur NFC du téléphone 4, n'est pas occupé par la réponse qu'aurait faite le dispositif 2.

A la figure 1B, on décrit maintenant un autre aspect de l'invention considérant une approche lente d'un lecteur (ou borne) NFC distant par le dispositif 2.

A L'étape 150, un utilisateur approche son téléphone (ou autre appareil NFC) équipé d'un dispositif RF, d'un lecteur distant ; Lorsque la distance D1 séparant le dispositif RF par rapport au lecteur 3 est suffisamment réduite (par exemple 10 cm), le champ radiofréquence du lecteur commence à être détectable au niveau du téléphone par le dispositif RF 2.

Le procédé prévoit ensuite de procéder de manière identique aux étapes 200 à 300. A l'étape 200, la détection et le résultat sont identiques mais à l'étape 300, URF2 à l'instant t1 n'est que légèrement supérieur à URF1 à t0. Ici, URF2 à t1 (1,5µs) est égal à environ 70 millivolts.

Donc, au test 400 de comparaison, le résultat est négatif puisque conformément à la figure 6C, la tension URF2 après un laps de temps de 1,5 secondes n'est toujours pas supérieure à Vcc/2 (1,5 Volt). Le procédé se poursuit donc à l'étape d'activation 550 (branche NON).

Dans ce cas, étape 550, le procédé prévoit une étape d'activation du dispositif RF. Cette activation peut être De préférence effectuée par défaut, c'est-à-dire que le dispositif fonctionne normalement (en étant non inhibé par défaut) sans qu'il y ait un besoin d'agir expressément au niveau du dispositif RF.

Ainsi, en l'absence de champ actif du téléphone 4, le dispositif RF peut fonctionner normalement par défaut.

Alternativement, l'activation peut consister à émettre un signal ou message d'activation ou toute autre information ou instruction de commande.
Les figures 5A et 5B illustrent respectivement un agencement du dispositif RF de l'invention par rapport au lecteur portable du téléphone 4 et une courbe schématique de variation du champ perçu par le dispositif RF. Ici, le dispositif RF reçoit uniquement le champ NFC du téléphone 4 auquel il est fixé.

Les figures 5C et 5D représentent respectivement une mesure à l'oscilloscope de la tension en fonction du temps générée aux bornes de l'antenne du dispositif ou dans une puce RF pour ce type de configuration et un agrandissement du front de montée en tension V (fig. 5D).

Les figures 6A et 6B illustrent respectivement un agencement du transpondeur RF de l'invention par rapport au lecteur NFC distant et une courbe schématique de la variation du champ de ce lecteur perçu par le dispositif 2 lors d'une phase d'exposition au lecteur distant 3. La figure 6C représente une mesure de la tension V en fonction du temps (t) pour ce type de configuration. Ici, le dispositif est toujours fixé au téléphone 4 et reçoit uniquement le champ d'un lecteur distant 3.

On peut observer que le temps t1 (fig. 5B) de montée en champ maximal ou tension maximale relatif au champ du téléphone 4 est plus court que le temps t2 (fig. 6B) relatif au champ du lecteur distant 3.

C'est cette différence de variation de tension, courant ou champ (dV/dt, dI/dt ou dϕ/dt) qui est utilisée par l'invention pour discriminer les lecteurs et/ou pour contrôler le dispositif RF 2.

Comme déjà indiqué, le critère de discrimination peut être basé sur la vitesse de montée du champ électromagnétique. La variation de flux électromagnétique « dϕ » en fonction du temps (dϕ/dt) sera perçue différemment au niveau du dispositif RF selon que l'entrée dans le champ se fait de façon progressive (cas d'un lecteur externe) ou bien s'il le champ est activé quasi-instantanément (cas d'une activation de la fonction NFC sur un téléphone).

En fonction du temps de montée t1 ou t2 (Figs. 5B, 6B), il est possible de déterminer si une requête provient du lecteur NFC embarqué dans le téléphone ou bien d'un lecteur externe distant. Le choix de communiquer avec l'un plutôt que l'autre pourra être fait par défaut.

Certaines puces permettent l'accessibilité à la tension mesurée aux bornes de l'antenne via un plot externe. En particulier, une puce de circuit intégré susceptible d'être utilisée pour l'invention porte la référence PN544 de la société NXP.

Une autre réalisation possible consiste à mesurer le temps de montée du champ et déterminer le temps t1 ou t2 nécessaire pour que V= f ((t) monte jusqu'à la tension Vcc de la puce sensiblement égal à 3 Volts.

### Description des figures 5C, 5D et 6C.

Elles illustrent des tests de mesure effectués sur oscillogramme en situation réelle et ont donné les résultats suivants.

La figure 6C montre la montée d'un champ radiofréquence (vu du dispositif) d'un lecteur NFC externe en champ fixe. Ce résultat peut simuler l'approche de la carte sans-contact du type paiement d'un utilisateur ou passage tourniquet RATP.

Les figurent 5C et son agrandissement 5D montrent la vitesse de montée de champ électromagnétique (toujours vu du dispositif RF) lors d'une mise sous tension d'un téléphone avec le dispositif RF adossé au téléphone 4 et activation de la fonction NFC du téléphone.

Dans le 1er cas, on a une montée de champ en 25 micros secondes (t2), tandis que dans l'autre cas, la montée du champ s'effectue en 1,5 voire 2 µs.

Selon un mode de mise en oeuvre, en se calant sur la fréquence de la porteuse comme référence, il est aisé de déclencher une horloge à partir d'un seuil de tension Min (notamment ici de quelques dizaines de millivolts par exemple 50 millivolts) et d'arrêter l'horloge lorsque la tension d'une tension maximale est atteinte (qui peut être la valeur de démarrage de la puce par exemple 3 Volts).

En fonction de la valeur (t1, t2) du temps obtenue, il est possible de discriminer l'origine du champ vu du dispositif comme expliqué aux figures 1A et 1B.

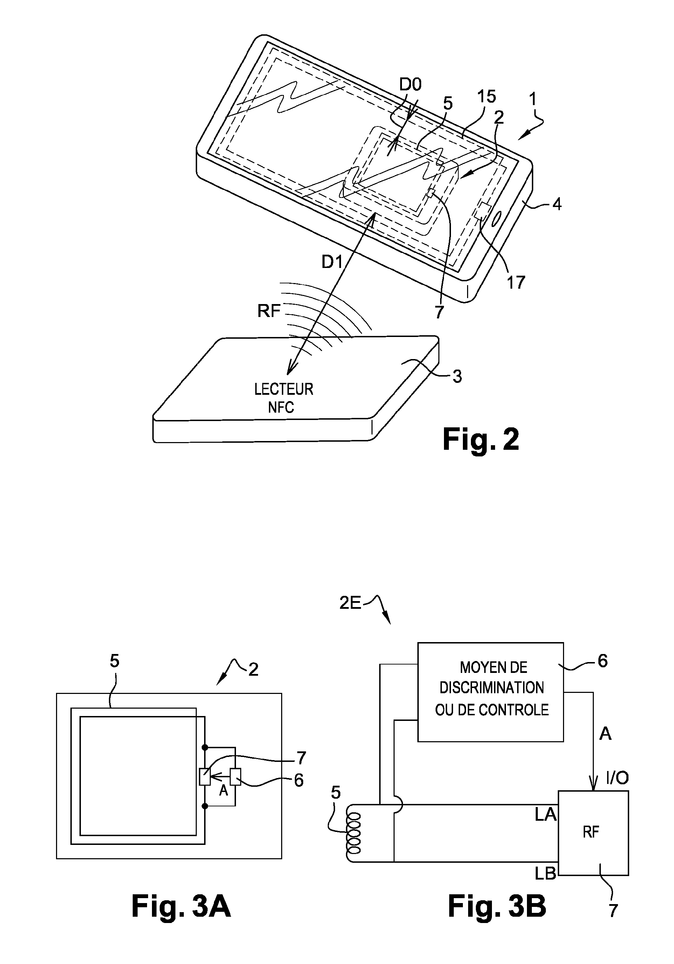

La figure 3A illustre un schéma de structure du dispositif 2 radiofréquence RF de la figure 2 ; et la figure 3B, illustre un schéma de principe électronique 2E du dispositif RF 2 modifié selon l'invention. Selon ce mode, le dispositif comprend des moyens de contrôle et/ou de discrimination et/ou de détection 6 inhibant ou activant la réponse du dispositif RF.

Selon une caractéristique, les moyens de contrôle 6 sont aptes à effectuer une inhibition ou activation du dispositif en fonction d'une valeur représentative de la variation du champ radiofréquence reçu du premier lecteur radiofréquence. Ces moyens sont donc aptes par exemple à extraire, par exemple, une variation de tension, d'intensité ou de champ magnétique en application des étapes du procédé illustré à la figure 1A ou 1B.

Le dispositif 2 comprend une puce radiofréquence 7 reliée à une antenne 5. La puce comprend un microcontrôleur et au moins un port (I/O) d'entrée/sortie relié aux moyens de détection/discrimination/contrôle 6 (un exemple de réalisation est illustré à la figure 4) ;

Le microcontrôleur peut comprendre une fonction inhibant le fonctionnement ou la réponse de la puce RF 7 en cas de présence d'un signal d'activation. Ce signal peut être une impulsion ou un potentiel haut ou une instruction d'inhibition présenté par le moyen 6 sur le port entrée sortie I/O. Le signal peut être une instruction, un message à interpréter par le dispositif RF.

Un microcontrôleur éventuel de la puce 7 peut comprendre un programme d'inhibition/activation de la réponse du dispositif RF selon un mode de réalisation.

Par exemple, après qu'une requête d'un lecteur est reçue, un programme P d'inhibition ou d'activation fait vérifier si un signal d'activation A a été reçu sur son second port d'entrée I/O ou si le niveau d'entrée est à un potentiel haut, ce qui signifie que le dispositif doit être inhibé pour ne pas répondre au lecteur 4 situé à proximité immédiate du dispositif RF 2. En conséquence, le dispositif 2 ne répond pas en modulant son impédance vu par le lecteur.

Dans le cas contraire (branche NON à la figure 1B), la requête radiofréquence provient du lecteur NFC distant 3 ; Le moyen de détection et/ou de discrimination de champ de et/ou contrôle 6 procède à l'activation du dispositif RF. L'activation peut être faite par défaut (absence de signal mode préféré), soit, ce moyen de contrôle 6 peut laisser ou placer le potentiel du port I/O à un niveau bas.

Dans ce dernier cas, le programme de la puce RF 7 du dispositif vérifie avant de répondre, quel est ou quel a été le potentiel du port entrée/sortie I/O ou si un signal (ou instruction /information) a été reçu. Comme le potentiel est resté bas, le programme P permet à la puce RF de moduler sa réponse.

Alternativement, le moyens de discrimination et/ou de contrôle 6 peut envoyer un message à la puce RF 7 à la manière des messages d'anticollision gérés par les lecteurs de dispositifs RFID (Radio identification Device). Le protocole ou principe d'anticollision peut être de tout type notamment, demande de mutisme pendant un certain temps prédéterminé ou attribution d'un créneau de temps aléatoire ou numéro d'ordre.

En l'occurrence, quand le lecteur du téléphone 4 est détecté par les moyens de détection/discrimination/contrôle 6, le message peut être un mutisme au moins pendant un délai prédéterminé.

Alternativement, le moyen de contrôle 6 peut agir sur ou comprendre un relai actionnant un interrupteur pour couper l'alimentation de la puce RF 7 tant que le champ identifié comme provenant du téléphone est présent et fermer ensuite l'interrupteur à la fin du champ (par exemple suite à une décharge d'une éventuelle capacité). L'interrupteur peut être placé à l'entrée du plot LA ou LB de la puce RF.

Alternativement, plutôt que d'avoir programme dans la puce, l'invention peut prévoir que l'activation actionne ou pas une fermeture d'une porte logique (ou interrupteur logique) de la puce sur le circuit de réponse de la puce RF pour permettre ou pas la réponse de la puce.

A la figure 4, les moyens 6 de détection et/ou discrimination et/ou de contrôle peuvent comprendre ici dan l'exemple, un étage (INT) ou composant 8 de mise en forme de signal et/ou redressement du signal (branché en parallèle sur un port LA de la puce RF) pour transformer le courant alternatif en courant continu, un comparateur 9 relié au redresseur 8. Le comparateur comprend une tension de référence fixée à une valeur discriminante prédéterminée (Vcc / 2 = 1,5 volt) ;

Cette tension de référence Vref = Vcc/2 peut être obtenue par une batterie annexe, ou capacité ou autre.

Les moyens 6 comprennent également ici à la sortie du redresseur 8, une dérivation comprenant un retardateur 10 branché à une entrée du comparateur 9. Le retard est ici de 1,5 micro seconde de manière à présenter au comparateur le même signal de sortie V du redresseur mais avec un retard de 1,5 µs. L'autre entrée du comparateur est alimentée par le signal URF2 à t = t0 + 1,5 µs. Ce délai peut correspondre au délai de montée en tension du lecteur NFC 4 du téléphone ou autre dispositif de lecture.

Quand il s'agit du champ du lecteur NFC du téléphone, le comparateur reçoit sur ses deux entrées les valeurs URF1 et URF2 égales respectivement à 50 millivolts et 2,9 Volts. Le comparateur 9 délivre en sortie, un signal A d'inhibition à destination de la puce RF 7 car 2,9 Volts est supérieur à Vcc/2 = 1,5 Volt conformément au test (étape 400) du procédé illustré à la figure 1A.

Par contre, dans le cas du champ du lecteur 3 distant (étape 150 du procédé fig. 1B), le comparateur 9 reçoit sur ses deux entrées les valeurs URF1 et URF2 égales respectivement à 50 millivolts et environ 70 millivolts.

Comme la valeur environ 70 millivolts est inférieure à la valeur de référence Vcc/2 = 1,5 Volt, le comparateur peut délivrer un signal d'activation du dispositif RF sur sa sortie (étape 550 du procédé fig. 1B).

Alternativement, le dispositif reste activé par défaut (absence de signal haut sur l'entrée I/O de la puce RF). Ainsi, de manière avantageuse, en absence de champ du lecteur 4 situé à proximité immédiate (adjacent), et en présence d'un lecteur 3 distant le dispositif fonctionne par défaut comme s'il n'y avait pas d'intervention du moyen de contrôle 6. Cela peut être utile dans un mode prévoyant une batterie (ou autre par exemple une capacité en décharge dans une diode) non disponible en en panne.

Selon un autre aspect, l'invention comprend un système 1 de communication radiofréquence entre un dispositif radiofréquence RF 2 et au moins un premier lecteur radiofréquence NFC (4).

Le système de communication 1 peut comprendre un second lecteur NFC 3 distant du dispositif RF 2 ; Ce lecteur 3 peut se substituer au précédent 4 ou être ajouté dans le système 1.

Les moyens de détection / discrimination / contrôle identifient / discriminent les lecteurs du voisinage 3, 4 par détection de la vitesse de montée en tension au niveau du dispositif RF.

Les moyens de discrimination de lecteurs RF peuvent être embarqués au niveau du dispositif RF 2. Ces moyens de discrimination, peuvent être par exemple intégrés dans la puce électronique 7 du dispositif RF, soit en étant annexe et externe à la puce du dispositif RF 2. Ces moyens de discrimination peuvent utiliser tout ou partie des éléments électriques / électroniques du dispositif RF 2, notamment l'antenne, une batterie éventuelle comme source d'énergie alternative à l'alimentation par le champ RF via un redresseur.

Comme indiqué, le système 1 peut se limiter au dispositif 2 et à un seul lecteur distant 3 tout en comprenant des moyens de discrimination / contrôle 6. Le test peut ici s'effectuer entre t0 (comme précédemment) et t1 égal ici dans cet autre exemple, à 25 µ secondes (URF2 est ici égal à environ 2,9 Volts). Ce dernier mode de réalisation, permet de discriminer une action volontaire normale d'un utilisateur sans précipitation ou accident ou déclenchement de lecture fortuite.

Si le dU/dt (2,85 / 25) est inférieur à 2,85 / 10 le système ou le dispositif 2 déduit que l'action est normale. De même, on peut définir une fourchette haute et basse correspondant à une action normale d'un utilisateur de manière à valider une transaction radiofréquence réalisée dans des conditions normales de sécurité.

Ainsi, les moyens de contrôle peuvent comprendre des valeurs de référence de la variation du champ radiofréquence correspondant à une fourchette haute et basse ; Ces valeurs de référence sont représentatives notamment d'une action normale d'un utilisateur (vitesse d'approche normale) de manière à valider une transaction radiofréquence réalisée dans des conditions normales de sécurité ou d'approche.

Le dispositif RF peut être activé avec un niveau haut sur une entrée ou avec un message de validation clair émis par les moyens de contrôle 6. Dans ce cas, son fonctionnement peut être à l'inverse de celui décrit à la figure 1B, le signal haut exprimant une activation permettant la lecture du dispositif.

Ici dans ce dernier cas, le fonctionnement par défaut du dispositif RF n'est pas prévu à priori. La lecture ne peut pas se faire si la validation n'est pas manifeste par un changement d'état récent du la puce RF.

## Revendications

**1.** Procédé de communication entre un dispositif (2) radiofréquence RF et un premier lecteur (4) radiofréquence NFC émettant un champ radiofréquence, ledit procédé comprenant une étape de contrôle (400) de la communication, **caractérisé en ce que** l'étape de contrôle intervient sur le dispositif RF en fonction d'une variation du champ radiofréquence.

**2.** Procédé de communication selon la revendication précédente, **caractérisé en ce qu'**il comporte une étape de détermination (300) d'une valeur représentative de la variation du champ radiofréquence reçu du premier lecteur radiofréquence NFC,

**3.** Procédé de communication selon l'une des revendications précédentes, **caractérisé en ce que** l'étape de contrôle effectue une inhibition ou activation (A) du dispositif RF en fonction de ladite variation.

**4.** Procédé de communication selon l'une des revendications précédentes, **caractérisé en ce que** ladite détermination est basée sur une mesure de la variation en fonction du temps de la tension (Vcc) ou de l'intensité (Icc) de courant généré par le champ radiofréquence (C1, C2) reçu au niveau du dispositif RF.

**5.** Procédé de communication selon la revendication précédente, **caractérisé en ce que** l'on détecte une valeur de tension (VRF2), au terme d'une durée (t1, t2) de réception de champ radiofréquence, notamment de 1,5 micro secondes et on inhibe la réponse du dispositif RF (2) si cette valeur de tension est supérieure à une valeur prédéterminée, notamment 1,5 Volt.

**5.** Procédé de communication selon la revendication 1, **caractérisé en ce que** l'on détecte une valeur de tension (URF2), au terme d'une durée de réception de champ radiofréquence, notamment de 1,5 micro seconde et on active le dispositif ou le laisse en l'état, pour lui permettre de répondre, si cette valeur de tension est inférieure à une valeur prédéterminée, notamment 2,9 Volt.

**6.** Dispositif radiofréquence RF (2) destiné à communiquer avec un premier lecteur radiofréquence (4) émettant un champ radiofréquence, ledit dispositif comprenant des moyens de contrôle de la communication, **caractérisé en ce que** les moyens de contrôle sont configurés pour intervenir sur le dispositif RF en fonction d'une variation du champ radiofréquence.

**7.** Dispositif radiofréquence selon la revendication précédente, **caractérisé en ce que** les moyens de contrôle comprennent des valeurs de référence de la variation du champ radiofréquence correspondant à une fourchette haute et basse représentative notamment d'une action normale d'un utilisateur de manière à valider une transaction radiofréquence réalisée dans des conditions normales de sécurité ou d'approche.
